# EUROPEAN PATENT APPLICATION

(11) **EP 4 838 109 A1**
(43) Date of publication of application: **11.11.2026**
(21) Application number: 25174343.1
(22) Date of filing: 06.05.2025
(51) Int. Cl.: F16D 65/18, F16D 65/00, F16D 55/226, F16D 55/00

(54) **INSIDE OUT DISC BRAKE WITH OUTBOARD SIDE ENCAPSULATION**

(71) Applicant: ZF CV Systems Europe BV, 1170 Brüssel (BE)
(72) Inventor: STRZALA, Wieslaw, 46-220 Byczyna (PL)
(74) Representative: Rabe, Dirk-Heinrich

(57) **Abstract**

The invention relates to an inside-out brake (1) for a vehicle, in particular for a commercial vehicle, comprising a brake carrier (5), a brake caliper (3) mounted to the brake carrier (5), a rotor assembly (7) and a rotor cover (11); wherein the rotor assembly (7) is configured to rotate relative to the brake carrier (5) about an axis of rotation (R) and comprises a disc element (13) for friction braking, the caliper (3) comprises at least one pair of inboard and outboard brake pads (19a, 19b) spaced apart from one another and arranged on opposite sides of the disc element (13) and configured to engage the disc element (13) for friction braking, wherein the rotor cover (11) is secured to the brake carrier (5) and encloses at least a part of the rotor assembly (7) such as to retain brake particles dissociating from the brake pads (19a,19b) and/or disc element (13), wherein the rotor cover (11) and the rotor assembly (7) define an inner brake volume (V) that accommodates the disc element (13) and the inboard and outboard brake pads (19a, 19b). It is suggested that the brake (1) comprises partitioning means (21) that are positioned axially between the inboard and outboard brake pads (19a, 19b) to separate the inner brake volume (V) into an inboard portion (Vᵢ) and an outboard portion (Vₒ).

## Description

The invention relates to an Inside-out brake for a vehicle, in particular for a commercial vehicle, said brake comprising a brake carrier, a brake caliper mounted to the brake carrier, a rotor assembly and a rotor cover, wherein the rotor assembly is configured to rotate relative to the brake carrier about an axis of rotation and comprises a disc element for friction braking, the caliper comprises at least one pair of inboard and outboard brake pads spaced apart from one another and arranged on opposite sides of the disc element and configured to engage the disc element for friction braking, wherein the rotor cover is secured to the brake carrier and encloses at least a part of the rotor assembly such as to retain brake particles dissociating from the brake pads and/or from the disc element, wherein the rotor cover and the rotor assembly define an inner brake volume that accommodates the disc element and the inboard and outboard brake pads.

An inside-out brake, such as for example shown in FR 1341744 A, DE 34466437 A1 or DE 3831868 A1 is generally defined by a caliper which embraces the rotor, in particular, the disc element, from radially inwards such that the caliper envelops the rotor from inside rather than straddling the rotor from the outside, as it would in conventional brakes. The non-rotating caliper is usually spaced apart from the rotating parts such as the disc element and its associated parts. During braking, particles of the brake pads dissociate from the brake pads and escape the confines of the brake at its outer circumference and/or axially, thus reaching the environment.

Due to increasing demand for meeting evolving environmental standards, brake manufacturers have been aiming to further reduce emissions also from braking systems during their use. As such, particle emissions stemming from friction braking are an area of focus. It has been suggested in the prior art to encapsulate the brake disc. This nevertheless still leaves a gap between the rotating parts and the stationary parts of the brake.

It has also been suggested to prevent dirt from entering different portions of the brake.

EP 1 884 679 A2 for example suggests to cover the gap with a cylindrical metal cover arranged at the circumference of a brake disc.

EP 1 972 821 B1 has suggested to provide a rubber boot to prevent dirt from reaching the running surface of a brake piston, leaving the brake pads open to the environment.

EP 2 020 538 A1 presents a further suggestion of preventing dirt of the environment entering the brake.

None of the aforementioned suggestions allow for adaptation to prevent dirt from exiting the brake, however.

In view thereof, it was an object of the invention to provide an improved inside-out brake that overcomes the disadvantages of the prior art as much as possible. In particular, it was an object of the invention to provide a design which allows to significantly inhibit particles from escaping the confines of the brake.

To attain this object, the invention suggests that the brake comprises partitioning means that are positioned axially between the inboard and outboard brake pads to separate the inner brake volume into an inboard portion and an outboard portion. The invention is based upon the realization that due to the functioning principle of friction brakes, it is impossible to hermetically close the gap between rotor cover and rotor assembly, since that interface needs to allow for rotational relative movement of the parts. Accordingly, the invention follows the approach of limiting the amount of brake particles that can reach this critical gap in the first place. To do so, the invention suggests to implement a particle barrier between the outboard portion and the inboard portion of the inner brake volume. As an effect thereof, brake particles dissociating from the outboard brake pad will be retained by the partitioning means and trapped in the outboard portion of the inner brake volume, where they can be removed with conventional devices. The inner brake volume, in particular radially inside the brake rotor, has been found to be a main passage way or brake particles dissociating from the outboard brake pad despite most brake pads being discharged during friction braking towards the radial outer periphery of the rotor assembly due to centrifugal forces.

In a preferred embodiment, the disc element has an inboard friction surface and an opposite outboard friction surface, wherein the partitioning means are positioned between the inboard and outboard friction surfaces. In doing so, the partitioning means are essentially symmetrically arranged in between the outboard and the inboard brake pads such as to allow for inner particle columns of roughly similar sizes to allow for efficient cooling of the respective brake pads, and the respective surfaces auf the disc element.

In a further preferred embodiment, the partitioning means extend radially inside of the disc element and along the disc element in a circumferential direction about the axis of rotation. In doing so, the disc element and its radial inner periphery serve as a counterpart to the partitioning means, which interact with the partitioning means such as to create an efficient particle barrier between the outboard portion and the inboard portion. Since the disc element is usually machined to a very high degree of precision, it becomes possible to position and provide the partitioning means to close-off the passageway along the inside of the disc element with corresponding precision since unwanted leakages due to imprecise manufacturing of the disc element are not to be expected.

In a further preferred embodiment, the partitioning means form a sealing gap with the disc element. In other words, it is suggested that the partitioning means and the disc element are positioned in such proximity facing one another that, despite not touching one another the radial clearance between the partitioning means and the disc element is small enough to prevent major air flow between the outboard and inboard portions of the inner brake volume, making it difficult for air to drag particles along past the partitioning means.

Preferably, the sealing gap has a clearance of 2 mm or less. The sealing gap width may vary across the different sections along the circumference, and may depend on e.g. an elastic deformation or displacement of the carrier during braking, and/or on radial tolerance of the brake's guiding bolts. It has been found that the above-mentioned range is achievable for a wide array of operating and manufacturing conditions while at the same time providing adequate particle retention.

In a further preferred embodiment, the partitioning means comprise a partitioning wall that comprises a (first) radial outer portion facing the disc element, wherein preferably the sealing gap is at least partly formed between the partitioning wall and the disc element.

In preferred embodiments, the partitioning wall may be formed from sheet metal or a different suitable flat material which has sufficient mechanical properties and heat resistance to withstand the working conditions inside a friction brake of the type mentioned above. The partitioning wall may be part of the rotor cover and secured to the brake carrier, for example.

In a further preferred embodiment, the partitioning wall comprises an axial wall portion that extends along the rotor Axis (R) wherein preferably the sealing gap is at least partly formed between the disc element and the axial wall portion. The wall portion may be formed monolithically on the partitioning wall, for example by plastically deforming a sheet metal part of the partitioning wall, or may be formed as one of more separate elements that are respectively secured as dedicated parts to a radial wall portion of the partitioning wall. By providing the axial wall portion along the rotor axis, the sealing gap obtains an axial length which increases the sealing properties and further hinders particles from passing through the sealing gap from the outboard portion to the inboard portion of the inner brake volume.

In a further preferred embodiment, the axial wall portion has an open ring shape and is preferably comprised of several segments, each segment being configured to mount to the partitioning wall.

In a further preferred embodiment, the partitioning wall comprises a (second) radial outer portion facing a radial inner portion of the carrier, wherein the (second) radial outer portion conforms to, in preferably abuts against, the shape of the carrier. Since both the carrier and the partitioning wall are stationary parts, the partitioning wall does not need to maintain a gap to ensure proper functioning of the friction brake procedure. Preferably, it is therefore suggested to have the partitioning wall seal off any passage of particles between the outboard portion and the inboard portion of the inner brake volume by directly abutting against the carrier. Preferably along the entire radial outer portion in which the two parts directly face each other.

In other words, since the brake according to the invention is an inside-out brake, it is suggested that the partitioning wall faces the disc element directly along the majority of the circumference of the disc element, and in that portion of the brake, where the brake caliper extends radially inside of the disk element from the inboard side to the outboard side, the partitioning wall adapts to the shape and closes off the inner brake volume relative to the brake caliper instead.

In a further preferred embodiment, wherein the brake, in particular the rotor cover, comprises a sleeve portion extending axially through the brake and delimiting the inner brake volume, the partitioning wall preferably comprises a radial inner portion facing the, preferably cylindrical, sleeve portion, wherein the radial inner portion conforms to, and preferably abuts against, the shape of the sleeve portion. The sleeve portion is typically a cover part which closes the brake volume off against the vehicles axle and further components in the wheel region of the vehicle. Like with the carrier, there is no relative movement to be expected between the sleeve and the partitioning wall such that for the same reasons as discussed above, it is preferred if the partitioning wall closes off by way of contact the inner brake volume to separate the inboard and outboard portions of the inner brake volume from one another.

In a further preferred embodiment, the caliper comprises a caliper arm extending axially from the inboard portion of the inner brake volume through to the outboard portion of the inner brake volume, wherein the partitioning means comprise a partitioning ridge extending circumferentially across the caliper arm in radially outwards to the disc element. Since in the portion of the brake where the caliper embraces the disc element from the inside, the caliper will be the closest element to the disc element, it is beneficial if the partitioning means are supplemented by the partitioning ridge which is preferably formed monolithically on the caliper arm, but may also be provided as a dedicated part which is secured to the caliper arm. In the region where the caliper arm extends along the disc element on its radial inner periphery, the partitioning ridge therefore assimilates the function of the partitioning wall. In doing so, another passageway for particles from the outboard side towards the import side is efficiently closed or at least made more difficult to pass for the brake particles.

In a further preferred embodiment, the partitioning ridge of the caliper at least partly forms the sealing gap between the partitioning ridge of the caliper and the disc element. Preferably the tolerances between the caliper and the sealing gap are in a range as discussed above for the portioning wall.

In a further preferred embodiment, the brake carrier comprises a carrier arm extending axially from the inboard portion of the inner brake volume through to the outboard portion of the inner brake volume. The partitioning means thus comprise a partitioning ridge extending circumferentially across the carrier arm in radially outwards to the disc element. Like for the caliper, also the carrier arm may comprise a portion extending from the inboard side to the outboard side of the disc element such as to provide the necessary support means for the brake pads which are actuated by movement of the caliper or for example.

Typically, the carrier may comprise a first support interface for supporting the inward brake pad and a second support interface for supporting the outboard brake pad, wherein the carrier arm extends axially to connect the support interfaces to one another, such that the brake pads mount to the support interfaces in mutually facing manner in order to be slidingly actuated towards and away from the disc element for friction braking.

The partitioning means are thus supplemented in those areas where the brake carrier is the closest element on the radial inner periphery of the disc element. The partitioning ridge assimilates the function of the partitioning wall among the remaining circumference of the disc element.

Preferably, the partitioning means comprise both the partitioning ridge on the caliper arm and on the carrier arm in addition to the partitioning wall along the remainder of the circumference of the disc element.

In a further preferred embodiment, the partitioning ridge of the carrier at least partly forms the sealing gap between the partitioning ridge of the carrier and the disc element. Again, it is preferred if the sealing gap in the region formed partly by the partitioning ridge of the carrier has substantially the same clearance as the sealing gap in the other portions along the circumference of the disc element.

In a further preferred embodiment, the disc element comprises a groove extending circumferentially around the rotor axis and the partitioning means extend into the groove to define the sealing gap between the partitioning means and the disc element. Having the partitioning means extend into the groove on the inner periphery of the disc element forces any particles which are en route from the outboard portion towards the inner portion to move radially inwards against the centrifugal forces caused by the rotating disc element, along the base of the groove through the sealing gap, and then again radially outwards towards the inward portion of the inner brake volume. Thus, a kind of labyrinth seal is provided by the interaction of the partitioning means and the groove in the disc element.

In preferred embodiments, one, several or all of the following elements extend into the groove to define the sealing gap between the partitioning means and the disc element:
- The partitioning wall,
- The partitioning ridge of the caliper arm, and/or
- The partitioning ridge of the carrier arm.

Particularly preferred, each of the elements in the groove forms a part of the sealing gap such that in summary, the sealing gap extends along the entire circumference of the groove.

In a further preferred embodiment, the sealing gap comprises an axial gap length and a radial gap width, wherein the gap width varies across the gap length. The gap width variations may be realized by circumferentially extending alternating protrusions and recesses.

In an alternatively preferred embodiment, the variations are provided by thread-like helically extending recesses. The helix may be wound such as to promote a counter flow of air towards the outboard portion of the disc element.

The gap width variations contribute to create air flow turbulence and increase the flow resistance of air towards the inboard brake portion of the inner brake volume, making it even more difficult for particles to pass the sealing gap, in particular, the portion of the groove which is provided with these gap width variation features.

The protrusions and recesses may be formed in the base of the groove, or on the partitioning means themselves, such as on the radial outer periphery of the partitioning ridges and/or along the axial wall portion of the partitioning wall.

In a further preferred embodiment, the groove comprises an inboard flank, and outboard flank and a groove base extending between the flanks, wherein the groove base comprises one or more air flow-inhabiting protrusions extending towards the partitioning means. These airflow-inhabiting protrusions create the aforementioned gap width variations.

The invention will be described hereinafter with reference to preferred embodiments shown in the accompanied drawings, wherein:
- Fig. 1: shows a schematic perspective view of an inside-out brake according to a preferred embodiment,
- Fig. 2: shows a partial cross section of the brake of Fig. 1,
- Fig. 3: shows a partial side view onto the brake of Figs. 1-2, seen from the inboard side towards the outboard side,
- Fig. 4: shows a schematic perspective detail view of a partitioning wall for the brake of Figs. 1-3,
- Fig. 5: shows a partial side view to the brake of Figs. 1-4, seen from the inboard portion towards the outboard portion with a part of the rotor cover removed,
- Fig. 6: shows a detail view of parts of the partitioning wall,
- Fig. 7: shows a schematic perspective view of a brake caliper of the brake of Figs. 1-6,
- Fig. 8: shows a schematic perspective view of a brake carrier of the brake of Figs. 1-7,
- Fig. 9: shows a partial cross-sectional view of the disc element of the brake of Figs. 1-8 in a preferred variant, and
- Fig. 10: shows another partial cross-sectional view of the disc element of Fig. 9 in a preferred variant.

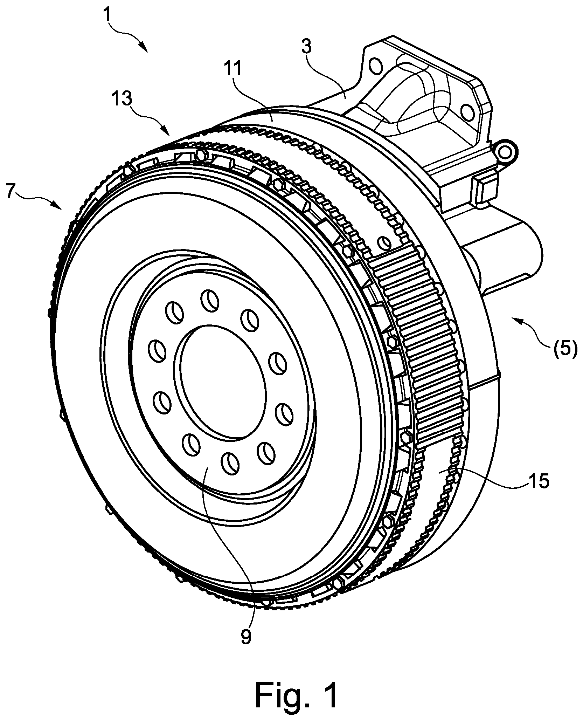

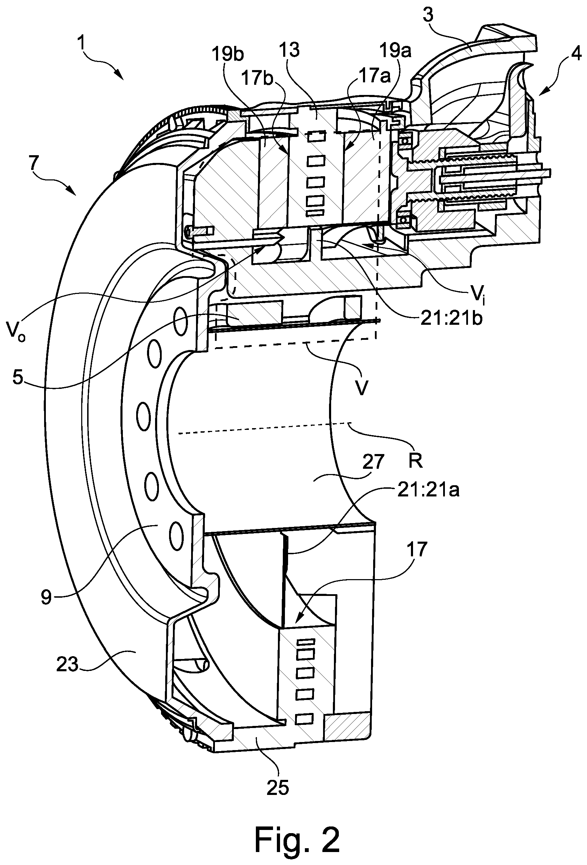

In Fig. 1, an inside-out brake 1 is depicted from the outside. The brake comprises a brake caliper 3 and a brake carrier 5 (Fig. 2). The brake caliper 3 is configured to be mounted stationary to the vehicle. Preferably, the caliper 3 is a sliding caliper which is configured to slide along the brake carrier 5 (Fig. 2).

The brake comprises a rotor assembly 7 having a mounting interface 9 for mounting the rotor assembly to a wheel or other rotating structure which is interconnected with the wheel (not shown). The rotor assembly 7 is configured to rotate about an axis of rotation R.

The brake 1 comprises a rotor cover 11 which is configured to partly cover a disc element 13 which is mounted to the rotor assembly 7. In the example shown, the disc element 13 is at least partly covered by a particle retention filter 15. Other configurations of disc elements are of course also possible and will be employed as far as the practical situations command.

The rotor cover 11 extends circumferentially entirely around the disc element 13, however leaving a gap in between the stationary rotor cover 11 and the disc element 13 which in theory would allow particles to escape from the confines of the inside-out brake 1.

The inner layout of brake 1 is shown in more detail in Fig. 2. Herein, it is shown that the brake caliper 3 accommodates on its inside a brake mechanism 4 that is configured to move an inboard brake pad 19a and an outboard brake pad 19b respectively towards a friction surface 17a, 17b of the disc element 13. The friction surface 17a facing the inboard brake pad 19a is titled inboard friction surface, while the friction surface 17b facing the outboard brake pad 19b is titled outboard friction surface 17b.

The rotor cover 11 and the rotor assembly 7 together define an inner brake volume V that accommodates at least the disc element 13 and the inboard brake pad 19a as well as the outboard brake pad 19b.

The rotor assembly 7 comprises a faceplate 23 and a cylindrical outer rotor wall 25 which connects the disc element 13 to the faceplate 23. The rotor assembly 7 may be realized as a multi-part assembly as shown, or may be partly or completely integrally formed.

During operation, the disc element 13 rotates relatively to the brake pads 19a, 19b. When activated, the brake mechanism 4 forces the brake pads 19a, 19b onto the respective friction surfaces 17a, 17b, leading to brake particles being dissociated from the brake pads 19a, 19b, and/or the disc element 13. Brake particles will accumulate inside the inner brake volume V. In order to trap these brake particles that dissociate from the outboard friction surface 17b and/or the outboard brake pad 19b, the invention suggests partitioning means 21 to be positioned in between the inboard and outboard brake pads 19a, 19b. The partitioning means 21 function to separate the inner brake volume V into an outboard portion Vₒ and an inboard portion Vᵢ.

The brake particles accumulating in the outboard portion Vₒ of the inner brake volume Vᵢ however, will either be forced radially outwards into the filter elements 15 shown in Fig. 1, or alternatively be retained in the outboard portion Vₒ by the partitioning means 21 at least to a significant extent. Therefore, the brake particles in the outboard portion Vₒ cannot travel easily into the inboard portion Vᵢ of the inner brake volume V which decreases the particle load in the inboard portion Vᵢ and therefore creates less of a burden for particle filter means on the inboard side of the brake 1.

Partitioning means 21 include a partitioning wall 21a that extends radially between an inner circumferential surface 17 of the disc element 13 and a sleeve 27 extending axially along the axis of rotation R. The sleeve 27 is part of the rotor cover 11. The partitioning wall 21a may preferably be made from sheet metal or another material with sufficient temperature resistance. Particularly preferred, the partitioning wall 21a is positioned in between the outboard friction surface 17b and the inboard friction surface 17a of the disc element 13.

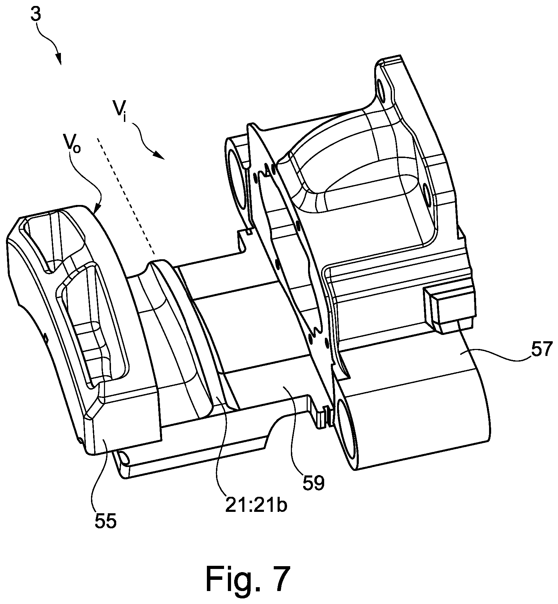

In addition to the partitioning wall 21a, it is preferred that the partitioning means 21 also include a partitioning ridge 21b formed on the brake caliper 3, which is shown in more detail in Fig. 7 below.

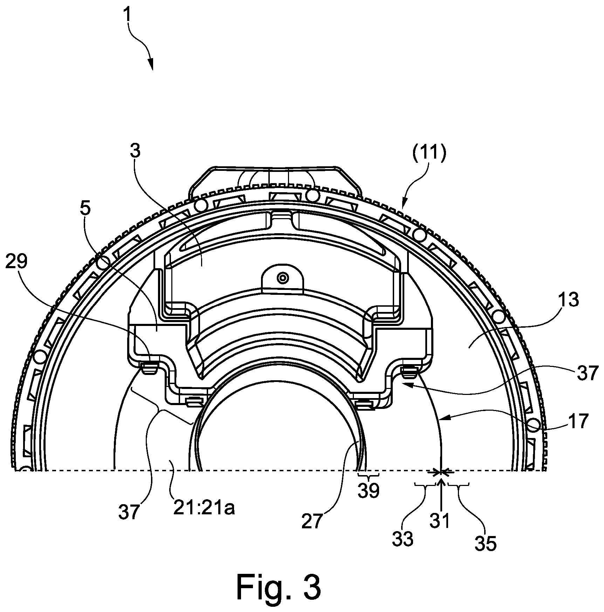

Fig. 3 shows a side view of the brake 1 seen from the outboard side towards the inboard side. The faceplate 23 is cut away, revealing a side view of the brake caliper 3 which is slidingly mounted on the brake carrier 5. On its bottom side - in the orientation shown in Fig. 3 -, the partitioning wall 21a is secured by conventional fixation means 29, which may be screw connections, to the carrier 5. The mounting interface of the partitioning wall 21a conforms to the opposing shape of the brake carrier 5 such as to close off the inner brake volume V between the inner portion V_{I} and outer portion V_{O} (cf. Fig. 2).

Between the partitioning wall 21a and the disc element 13, a sealing gap 31 is formed which allows for relative movement of the disc element 13 without unduly contacting the partitioning wall 21a while at the same time functioning to trap particles in the outboard portion Vₒ of the inner brake volume V. On its radial inside, the partitioning wall 21a abuts against, or is secured to, the sleeve 27.

The portion of the partitioning wall 21a facing the disc element 13 is the so-called radial outer portion 33 while the corresponding portion of the disc element 13 is its radial inner portion 35. The radial inner portion 35 of the disc element is delimited by its inner circumferential surface 17. The radial outer portion 33 of the partitioning wall 21a is a first radial outer portion, while the segment of the portioning wall facing the brake carrier 5 is designated to be a second radial outer portion 37. Together, the first and second radial outer portions 33, 37 span the entire circumference of the disc element 31 about the axis of rotation R.

The segment of the partitioning wall 21a facing the sleeve portion 27 is designated to be the radial inner portion 39 of the partitioning wall 21a.

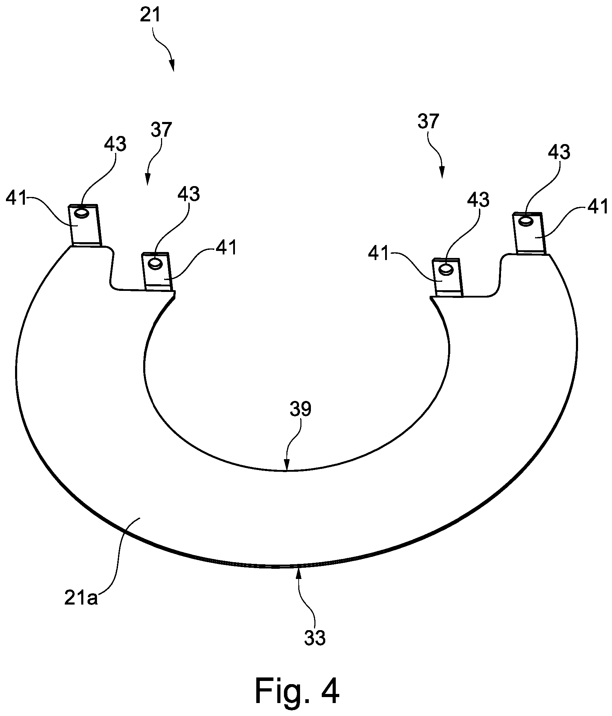

Fig. 4 shows the partitioning wall 21a which forms part of the partitioning means 21 in isolation. The partitioning wall 21a comprises a number of, preferably a plurality of, tabs 41 which are formed on the partitioning wall 21a in the second radial outer portions 37. Preferably, the tabs 41 extend axially away from the partitioning wall 21a and respectively comprise a mounting hole 43 configured to accept the fixation means 29. Preferably, the tabs 41 are integrally formed with the partitioning wall 21a and bent into shape.

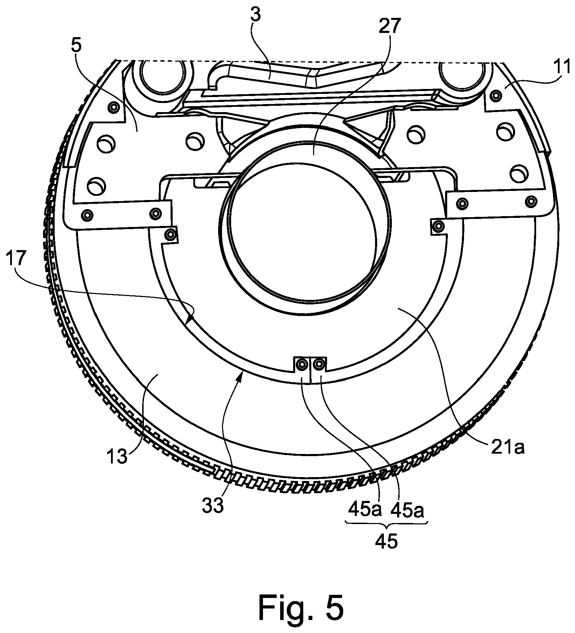

Fig. 5 shows the inside-out brake 1 of Figs. 1-4 in a partial side view with a bottom part of the rotor cover 11 removed - bottom referring to the orientation shown in Fig.5. This reveals a view onto the brake carrier 5 from the inboard side outwards. The partitioning wall 21a has in this figure been slightly modified in comparison to the partitioning wall shown above in Fig. 4. The partitioning wall 21a comprises, in its first radial outer portion 33, a cover extender 45 that is made up of a plurality of segments 45a. The cover extender 45 is preferably secured to the partitioning wall 21a by fixation means (not shown) that may or not be releasable. For example, these fixation means may be formed as screw connections or rivets.

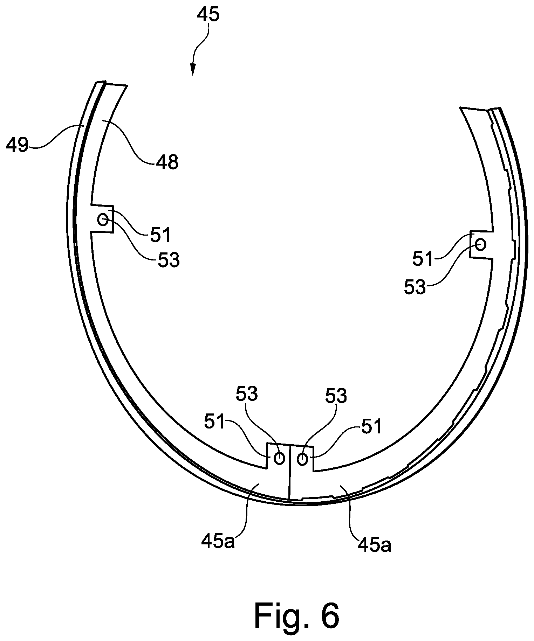

The cover extender 45 is shown in more detail in Fig. 6.

The axial wall portion 45 comprises a radially extending mounting portion 48 having a number of tabs 51 configured to abut against the partitioning wall 21a. The tabs respectively comprise mounting holes 53 for the aforementioned fixation purposes.

The cover extender 45 comprises the radially extending mounting interface 48 and an axially extending (hereinafter: "axial") wall portion 49 which is configured to extend parallel to the inner circumferential surface 17 of the disc element 13 such that the axial wall portion 49 and the disc element 13 together define the sealing gap in the first radial outer portion of the partitioning wall 21a. The cover extender 45 has an open ring shape and the top portion, as oriented in Fig. 6, is configured to conform to the shape of the brake carrier 5.

Fig. 7 shows a schematic three-dimensional view of the brake caliper 3 of the inside-out brake 1. The brake caliper 3 comprises an outboard brake shoulder 55, an inboard brake shoulder 57 and a caliper arm 59 extending between the inboard and outboard caliper shoulders 55 and 57 from the inboard portion Vᵢ to the outboard portion Vₒ of the inner brake volume V.

The caliper arm 59 comprises a partitioning ridge 21b which forms part of the partitioning means 21. The partitioning ridge 21b extends radially outwards from the caliper arm 59 towards the disc element 13 in the mounted state as shown in Fig. 2.

Preferably, the partitioning ridge 21b of the caliper 3 and the partitioning wall 21a are arranged at the same axial position, i.e., between the inboard brake pads 19a and outboard brake pads 19b and particularly preferred between the inboard and outboard friction surfaces 17a, 17b of the disc element 13 when mounted. Also, when mounted, the partitioning ridge 21b together with the inner circumferential surface 17 of the disc element 13 forms a part of the sealing gap 31 between the outboard portion Vₒ and inboard portion Vᵢ of the inner brake volume V.

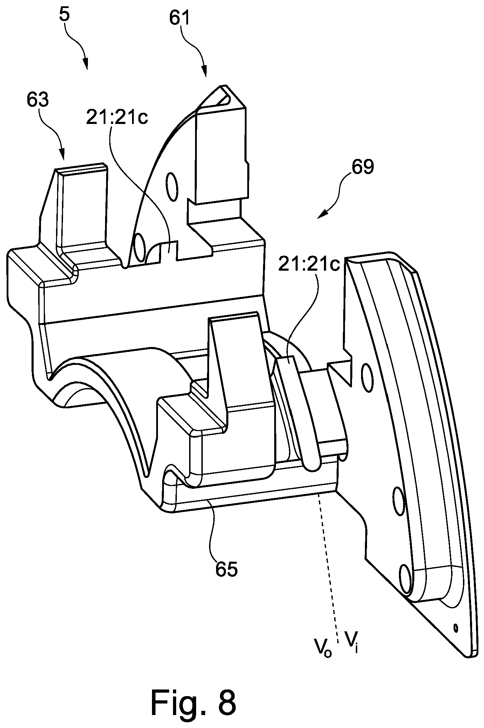

Fig. 8 shows the brake carrier 5 of the inside-out brake 1 of Figs. 1-7 in isolation in a schematic perspective three-dimensional view. The brake carrier 5 comprises an inboard mounting interface 61 configured to accommodate the inboard brake pad 19a, and an outboard mounting interface 63 configured to accommodate the outboard brake pad 19b. The mounting of the brake pads may be conducted in a generally known, conventional manner.

The brake carrier 5 further comprises a carrier arm 65 extending from the inboard interface 61 through to the outboard interface 63. In the axial direction, the brake carrier 5 comprises an interstitial opening 69 configured to slidingly accommodate the brake caliper 3 and/or brake mechanism 4.

With respect to the invention, the carrier arm 65 comprises a partitioning ridge 21c which forms part of the partitioning means 21. The partitioning ridge 21c extends radially outwards on the carrier arm 65 towards the disc element 13 in its mounted state. In doing so, the partitioning means 21 not only span across the brake caliper 3 and the circumference outside of the brake caliper 3 and carrier 5 (which is covered by the partitioning wall 21a), but now also cover the section of the circumference where the brake carrier 5 faces the disc element 13. Together, the partitioning wall 21a, the partitioning ridge 21b of the caliper and the partitioning ridge 21c of the brake carrier 5 cover the entire circumference radially inside the disc element 13 to separate the brake volume V into the outer portion Vₒ and inner portion Vᵢ.

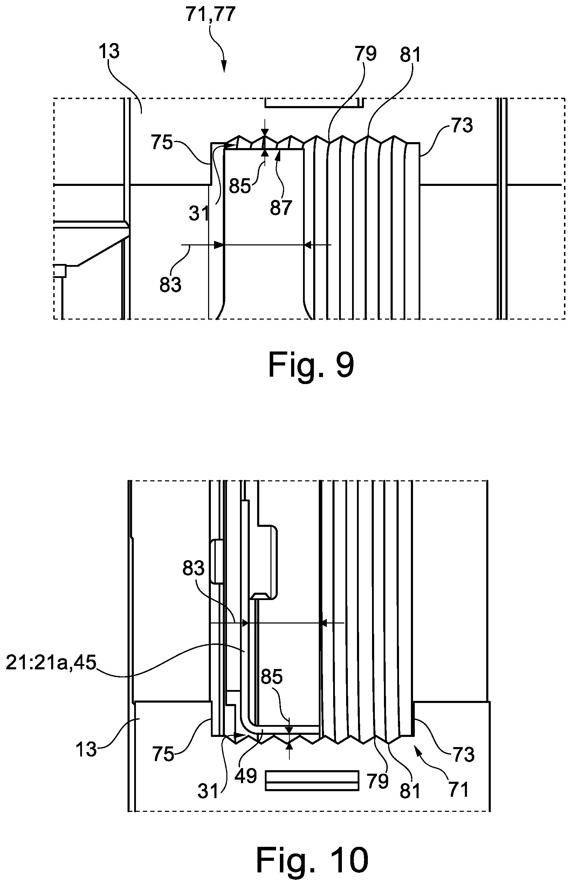

The Figs. 9 and 10 show a variant for the disc element 13 which may be realized together with the remaining features of Figs. 1-8 to achieve even better sealing properties between the outboard portion Vₒ and the inboard portion Vᵢ of the inner brake volume V. In particular, the disc element 13 may comprise, in its inner circumferential surface 17, a groove 71. The groove is configured to accommodate the partitioning means such as one of the partitioning ridges 21b, c (Fig. 9) and/or the partitioning wall 21a (Fig. 10).

The groove 71 comprises an inboard flank 73, an outboard flank 75, and a groove base 77 extending between the two flanks 73, 75. Along the groove base 77, there are preferably provided a number of alternating flow-inhibiting protrusions 79 and recesses 81 which are configured to increase flow resistance for air travelling past the sealing gap formed between the groove 71 and the partitioning means 21. Together with the groove 71, the sealing gap 31 obtains an axial gap length 83 and a radial gap width 85 inside the groove 71.

By virtue of the alternating protrusions 79 and recesses 81, the gap width 85 varies along the gap length 83. In the embodiments shown in Figs. 9 and 10, the protrusions and recesses are provided in the groove base 77. Alternatively or additionally, protrusions and recesses might also be provided on the partitioning means 21, for example, on the outer circumferential surfaces 87 of the partitioning ridges or along the axial wall portions 49 of the partitioning wall 21a.

By forcing the air to move both in the radial direction and in the axial direction when traversing the sealing gap 31, the groove 71 and the partitioning means 21 together create a type of labyrinth seal which increases the particle retention efficiency in the outboard portion V_{O} of the inner brake volume V.

### List of reference signs (Part of the description)

- 1: inside-out brake
- 3: brake caliper
- 4: brake mechanism
- 5: brake carrier
- 7: rotor assembly
- 9: mounting interface
- 11: rotor cover
- 13: disc element
- 15: filter
- 17: inner circumferential surface
- 17a: inboard friction surface
- 17b: outboard friction surface
- 19a: inboard brake pad
- 19b: outboard brake pad
- 21: partitioning means
- 21a: partitioning wall
- 21b,: partitioning ridge, caliper
- 21c: partitioning ridge, carrier
- 23: faceplate
- 25: rotor wall
- 27: sleeve
- 29: fixation means
- 31: sealing gap
- 33: first radial outer portion
- 35: radial inner portion
- 37: radial outer portion
- 39: radial inner portion
- 41: tab
- 43: mounting hole
- 45: cover extender
- 45a: segment
- 47: fixation means
- 48: mounting portion
- 49: axial wall portion
- 51: tab
- 53: mounting hole
- 55: outboard brake shoulder
- 57: inboard brake shoulder
- 59: caliper arm
- 61: inboard mounting interface
- 63: outboard mounting interface
- 65: carrier arm
- 69: opening
- 71: groove
- 73: inboard flank
- 75: outboard flank
- 77: groove base
- 79: protrusion
- 81: recess
- 83: gap length
- 85: gap width
- 87: outer circumferential surface
- R: axis of rotation
- V: inner brake volume
- Vi: inboard portion
- Vo: outboard portion

## Claims

1. An Inside-out brake (1) for a vehicle, in particular for a commercial vehicle, comprising a brake carrier (5), a brake caliper (3) mounted to the brake carrier (5), a rotor assembly (7) and a rotor cover (11); wherein
the rotor assembly (7) is configured to rotate relative to the brake carrier (5) about an axis of rotation (R) and comprises a disc element (13) for friction braking,
the caliper (3) comprises at least one pair of inboard and outboard brake pads (19a, 19b) spaced apart from one another and arranged on opposite sides of the disc element (13) and configured to engage the disc element (13) for friction braking;
the rotor cover (11) is secured to the brake carrier (5) and encloses at least a part of the rotor assembly (7) such as to retain brake particles dissociating from the brake pads (19a,19b) and/or from the disc element (13), wherein the rotor cover (11) and the rotor assembly (7) define an inner brake volume (V) that accommodates the disc element (13) and the inboard and outboard brake pads (19a, 19b);
**characterized in that** the brake (1) comprises partitioning means (21) that are positioned axially between the inboard and outboard brake pads (19a, 19b) to separate the inner brake volume (V) into an inboard portion (Vᵢ) and an outboard portion (Vₒ).

2. The brake of claim 1,
**characterized in that** the disc element (13) has an inboard friction surface (17a) and an opposite outboard friction surface (17b), wherein the partitioning means (21) are positioned between the inboard and outboard friction surfaces (17a, 17b).

3. The brake (1) of claim 2,
**characterized in that** the partitioning means (21) extend radially inside of the disc element (13) and along the disc element (13) in a circumferential direction about the axis of rotation (R).

4. The brake (1) of claim 3,
**characterized in that** the partitioning means (21) form a sealing gap (31) with the disc element (13).

5. The brake (1) of any one of the preceding claims,
**characterized in that** the partitioning means (21) comprise a partitioning wall (21a) that comprises a first radial outer portion (33) facing the disc element (13), wherein preferably, the sealing gap (31) is at least partly formed between the partitioning wall (21a) and the disc element (13).

6. The brake (1) of claim 5,
wherein the partitioning wall (21a) comprises an axial wall portion (49) that extends along the rotor axis (R), wherein preferably the sealing gap (31) is at least partly formed between the disc element (13) and the axial wall portion (49).

7. The brake (1) of claim 6,
wherein the axial wall portion (49) has an open ring shape, and is preferably comprised of several segments (45a), each segment (45a) being configured to mount to the partitioning wall (21).

8. The brake (1) of claim 5 to 7,
**characterized in that** the partitioning wall (21a) comprises a second radial outer portion (37) facing a radial inner portion of the carrier (5), wherein the second radial outer portion (37) conforms to, and preferably abuts against, the shape of the carrier (5).

9. The brake (1) of any one of claims 5 to 8,
wherein the brake (1), in particular the rotor cover (11), comprises a sleeve portion (27) extending axially through the brake (1) and delimiting the inner brake volume (V), **characterized in that** the partitioning wall (21a) comprises a radial inner (39) portion facing the sleeve portion (27), wherein the radial inner portion (39) conforms to, and preferably abuts against, the shape of the sleeve portion (27).

10. The brake (1) of any one of claims 4 to 9,
wherein the caliper (3) comprises a caliper arm (59) extending axially from the inboard portion (Vᵢ) of the inner brake volume (V) through to the outboard portion (Vₒ) of the inner brake volume (V),
**characterized in that** the partitioning means (21) comprise a partitioning ridge (21b) extending circumferentially across the caliper arm (59) and radially outwards to the disc element (13).

11. The brake (1) of claim 10,
**characterized in that** the partitioning ridge (21b) of the caliper (3) at least partly forms the sealing gap (31) between the partitioning ridge (21b) of the caliper (3) and the disc element (13).

12. The brake (1) of any one of claims 4 to 11,
wherein the brake carrier (5) comprises a carrier arm (65) extending axially from the inboard portion (Vᵢ) of the inner brake volume (V) through to the outboard portion (Vₒ) of the inner brake volume (V),
**characterized in that** the partitioning means (21) comprise a partitioning ridge (21c) extending circumferentially across the carrier arm (65) and radially outwards to the disc element (13).

13. The brake (1) of claim 12,
**characterized in that** the partitioning ridge (21c) of the carrier (5) at least partly forms the sealing gap (31) between the partitioning ridge (21c) of the carrier (5) and the disc element (13).

14. The brake (1) of any one of claims 4 to 13,
**characterized in that** the disc element (13) comprises a groove (71) extending circumferentially around the rotor axis (R), and the partitioning means (21) extend into the groove (71) to define the sealing gap (31) between the partitioning means (21) and the disc element (13).

15. The brake (1) of any one of claims 4 to 14,
**characterized in that** the sealing gap (31) comprises an axial gap length (83) and a radial gap width (85), and wherein the gap width (85) varies across said gap length (83).

16. The brake (1) of claim 15,
**characterized in that** the groove (71) comprises an inboard flank (73), an outboard flank (75) and a groove base (77) extending between the flanks (73, 75), wherein the groove base (77) comprises one or more air flow-inhibiting protrusions (79) extending towards the partitioning means (21).
